# FASCICULE DE BREVET EUROPEEN

(11) **EP 3 208 666 B1**
(45) Date de publication et mention de la délivrance du brevet: **21.11.2018**
(21) Numéro de dépôt: 16156477.8
(22) Date de dépôt: 19.02.2016
(51) Int. Cl.: G04B 35/00, G04B 13/02, F16H 55/18

(54) **ROUE D'HORLOGERIE A RATTRAPAGE DE JEU**
UHRENRAD MIT SPIELNACHSTELLUNG
CLOCK WHEEL WITH BACKLASH COMPENSATION

(43) Date de publication de la demande: 23.08.2017
(73) Titulaire: Blancpain SA, 1348 Le Brassus (CH)
(72) Inventeur: FEYER, Julien, 1214 Vernier (CH)
(74) Mandataire: Giraud, Eric

(56) Documents cités:
- EP-A1- 1 380 772
- EP-A1- 1 555 584
- EP-A1- 2 672 335
- CH-A- 218 688
- CH-A2- 708 553
- DE-A1-102009 037 624

## Description

### Domaine de l'invention

L'invention concerne une roue d'horlogerie composée à rattrapage de jeu, comportant une denture périphérique dont chaque dent comporte, de part et d'autre de sa partie médiane, une première demi-dent comportant une première partie du profil de denture, et une deuxième demi-dent comportant une deuxième partie du profil de denture, chaque première demi-dent étant mobile par rapport à la deuxième demi-dent de la même dent , à l'encontre de moyens de rappel élastique tendant à écarter l'une de l'autre la première demi-dent et la deuxième demi-dent de la même dent.

L'invention concerne encore un rouage d'horlogerie, comportant au moins une telle roue et une roue complémentaire.

L'invention concerne encore un mouvement d'horlogerie comportant au moins un tel rouage d'horlogerie, ou comportant au moins une telle roue.

L'invention concerne encore une montre comportant un tel mouvement, ou comportant au moins un tel rouage d'horlogerie, ou comportant au moins une telle roue.

L'invention concerne le domaine des mécanismes d'horlogerie comportant des rouages.

### Arrière-plan de l'invention

On connait, surtout dans la mécanique lourde : machines-outils, machines de façonnage, automobile, moteurs, transmission d'énergie, chemins de fer à crémaillère, des mécanismes comportant des engrenages à rattrapage de jeu, comportant au moins une roue avec deux flasques accouplés au travers d'un élément élastique. Ces technologies éprouvées se prêtent mal à la miniaturisation dans un ensemble de micro-mécanique, et tout particulièrement dans un mouvement d'horlogerie.

L'horlogerie a développé plutôt des roues monoblocs comportant des éléments élastiques pour le rattrapage de jeu avec une roue antagoniste, sous la forme d'une denture élastique, notamment avec des dents en plusieurs parties comportant des lames flexibles, ou encore sous la forme d'une denture à dents complètes, portées par des bras ou rayons élastiques. Ces roues sont souvent conçues pour un sens de rotation unique. Les documents EP 1 555 584, EP 2 672 335, DE 10 2009 037 624, EP 1 380 772, CH 708 553 et CH 218688 décrivent de telles roues. Quand ces roues sont à plusieurs niveaux, monoblocs ou non, la roue antagoniste doit généralement être en prise avec tous les niveaux à la fois. La réalisation de telles roues nécessite des moyens de production particuliers, elle est difficile et coûteuse, et de telles roues restent fragiles en particulier en cas de chocs.

### Résumé de l'invention

L'invention se propose de réaliser des roues à usage horloger, à coût de fabrication modéré, capables de remplacer des roues existantes dans des mouvements sans modifications de ceux-ci, et à faible encombrement, notamment en épaisseur.

L'invention concerne ainsi une roue d'horlogerie composée à rattrapage de jeu, selon la revendication 1.

L'invention concerne encore un rouage d'horlogerie, comportant au moins une telle roue et une roue complémentaire, selon la revendication 11.

L'invention concerne encore un mouvement d'horlogerie comportant au moins un tel rouage d'horlogerie, ou comportant au moins une telle roue.

L'invention concerne encore une montre comportant un tel mouvement, ou comportant au moins un tel rouage d'horlogerie, ou comportant au moins une telle roue.

### Description sommaire des dessins

D'autres caractéristiques et avantages de l'invention apparaîtront à la lecture de la description détaillée qui va suivre, en référence aux dessins annexés, où :
- la figure 1 représente, de façon schématisée, et en perspective vue de dessus, une roue composée d'horlogerie à rattrapage de jeu selon l'invention, comportant, coaxiales, montées tête-bêche et encastrées l'une dans l'autre, une première demi-roue supérieure et une deuxième demi-roue inférieure, comportant chacune une denture constituant périphériquement une partie du profil total et débordant axialement sur l'autre demi-roue;
- la figure 2 représente, de façon similaire à la figure 1, la première demi-roue supérieure seule, et retournée par rapport à la figure 1 ;
- la figure 3 représente, de façon similaire à la figure 1, la deuxième demi-roue inférieure seule, dans la même position que sur la figure 1 ;
- la figure 4 représente, de façon schématisée, et en perspective, un rouage composé de la roue de la figure 1 et d'une roue complémentaire engrenant avec la précédente;
- les figures 5 et 6 représente, de façon schématisée, et en vue en plan de dessus et de dessous, le rouage de la figure 4 ;
- la figure 7 représente, de façon schématisée, et en coupe passant par les axes de rotation des deux roues qui le constituent, le rouage de la figure 4, avec la denture de la roue complémentaire sensiblement au milieu de la denture composée de la roue composée selon l'invention, faisant face aux deux planches des deux demi-roues de cette roue composée;
- la figure 8 représente, de façon schématisée, et en coupe passant par son axe de rotation, une variante de roue selon l'invention avec une rondelle entretoise interposée entre la première demi-roue supérieure et la deuxième demi-roue inférieure ;
- la figure 9 représente, de façon schématisée, et en coupe passant par son axe de rotation, une autre variante de roue selon l'invention où la première demi-roue supérieure et la deuxième demi-roue inférieure comporte chacune, dirigé vers l'autre demi-roue, un filet pour réduire la surface de contact lorsqu'elles portent l'une sur l'autre;
- la figure 10 représente, de façon similaire à la figure 7, où la denture de la roue complémentaire engrène seulement avec la partie supérieure de la denture composée de la roue composée, et faisant face seulement à la planche de la première demi-roue supérieure;
- la figure 11 représente, de façon similaire à la figure 10, où la denture de la roue complémentaire engrène seulement avec la partie inférieure de la denture composée de la roue composée, et faisant face seulement à la planche de la deuxième demi-roue inférieure;
- la figure 12 représente, de façon similaire à la figure 2, la première demi-roue supérieure seule, dans une variante où elle comporte à la fois un premier ressort dans un premier oblong de limitation supérieur, et une première goupille ;
- la figure 13 représente, de façon similaire à la figure 3, la deuxième demi-roue inférieure seule, dans une variante où elle comporte à la fois un deuxième ressort dans un deuxième oblong de limitation inférieur, agencé pour recevoir la première goupille de la figure 12, et une deuxième goupille agencée pour être logée dans le premier oblong de la figure 12 et coopérer avec le premier ressort,
- la figure 14 est un schéma-blocs représentant une montre comportant un mouvement d'horlogerie comportant lui-même un tel rouage d'horlogerie avec une telle roue selon l'invention.

### Description détaillée des modes de réalisation préférés

L'invention concerne une roue d'horlogerie 1 composée à rattrapage de jeu, comportant une denture périphérique 2 dont chaque dent 3 comporte, de part et d'autre de sa partie médiane, une première demi-dent 4 comportant une première partie 40 du profil de denture, et une deuxième demi-dent 5 comportant une deuxième partie 50 du profil de denture. Chaque première demi-dent 4 est mobile par rapport à la deuxième demi-dent 5 de la même dent 3, à l'encontre de moyens de rappel élastique 6, qui tendent à écarter l'une de l'autre la première demi-dent 4 et la deuxième demi-dent 5 de la même dent 3.

La roue 1 selon l'invention est prévue pour travailler dans les deux sens de rotation

Selon l'invention, la roue 1 comporte, empilées axialement, une première demi-roue 400 portant toutes les premières demi-dents 4, et une deuxième demi-roue 500 portant toutes les deuxièmes demi-dents 5.

La première demi-roue 400 et la deuxième demi-roue 500 ont une mobilité limitée en rotation l'une par rapport à l'autre, autour de l'axe de la denture 2, et à l'encontre des moyens de rappel élastique 6.

La denture de chaque demi-roue déborde sur l'autre demi-roue, la première demi-roue 400 comportant des premiers évidements 41 dans chacun desquels une deuxième demi-dent 5 est mobile entre deux premières demi-dents 4 successives, et la deuxième demi-roue 500 comportant des deuxièmes évidements 51 dans chacun desquels une première demi-dent 4 est mobile entre deux deuxièmes demi-dents 5 successives. Les deux demi-roues 400 et 500 sont ainsi montées tête-bêche et encastrées l'une dans l'autre.

Plus particulièrement, les moyens de rappel élastique 6 sont agencés pour exercer un couple résistant d'une demi-roue par rapport à l'autre, ce qui veut dire que l'écartement entre les premières demi-dents 4 et deuxièmes demi-dents 5 est le même pour toutes les dents 3 de la roue 1. Quand cette roue 1 est en prise avec une roue complémentaire 10 antagoniste, ce qui se passe au niveau des dents 3 en cours d'engrènement est donc répercuté à toutes les autres dents 3 de la roue 1.

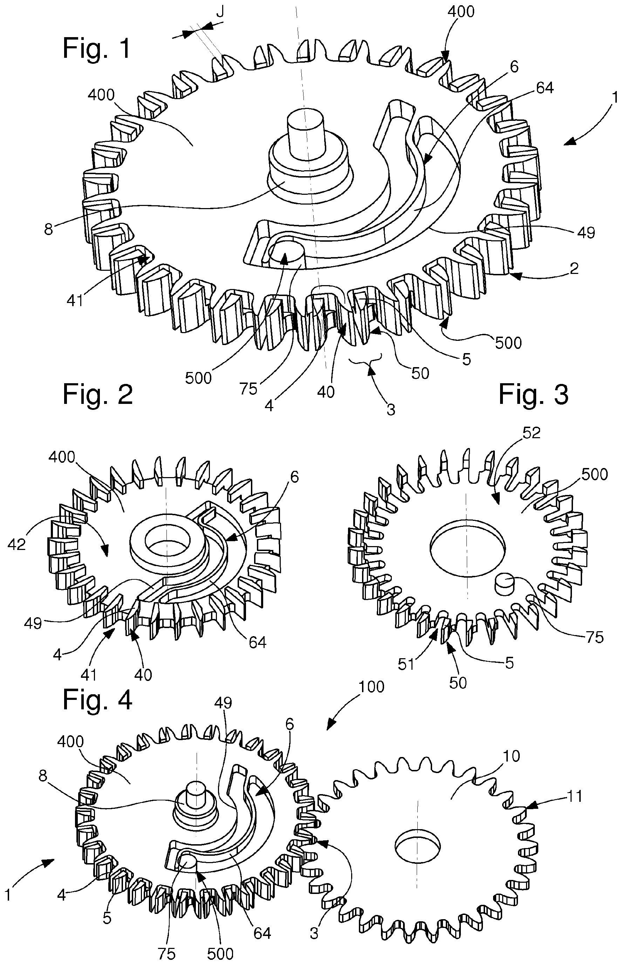

La position de repos, sans engrènement avec une roue complémentaire, correspond à un jeu J entre les demi-dents 4 et 5 qui est à sa valeur maximale. Le moyen de rappel élastique 6, constitué par le ressort 64 dans le cas des figures 1 à 6, a un léger pré-armage. La valeur de ce jeu J dépend du pré-armage du ressort, du module de la denture et de la butée : au repos les deux demi-dents 4 et 5 de chaque dent 3 s'écartent et, en fonction du pré-armage du ressort, peuvent venir en appui contre l'autre demi-dent qui l'entoure. Dans la pratique, et de façon non limitative, ce jeu maximal est avantageusement compris entre 0.05 à 0.07mm.

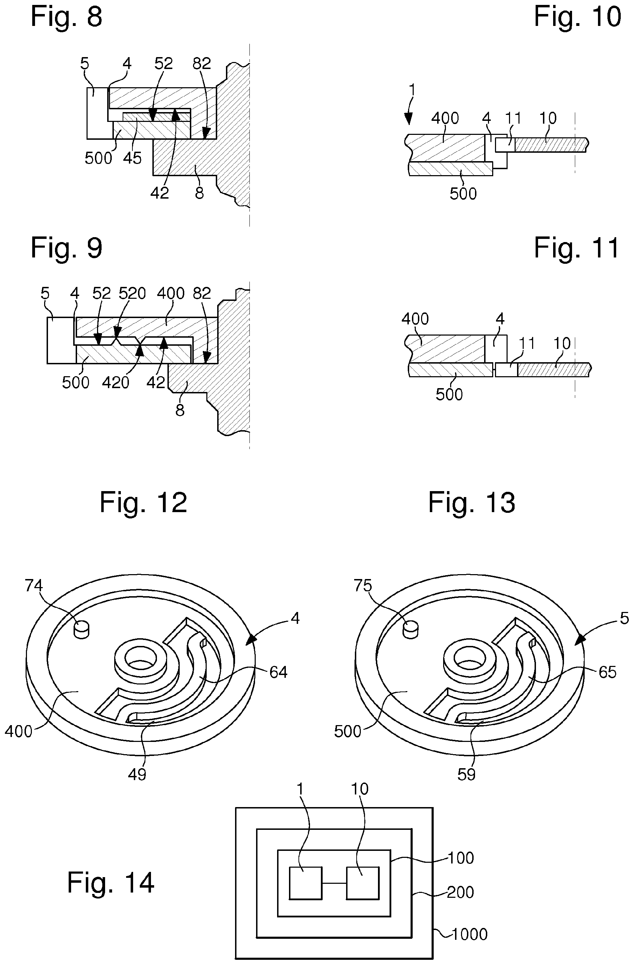

La première demi-roue 400 comporte une première surface d'appui 42 agencée pour coopérer en appui de butée, ou bien avec une deuxième surface d'appui 52 antagoniste que comporte la deuxième demi-roue 500, ou bien avec une entretoise 45 montée prisonnière entre la première surface d'appui 42 et la deuxième surface d'appui 52, tel que visible sur la figure 8. Dans la variante de la figure 9, la première surface d'appui 42 et/ou la deuxième surface d'appui 52 comporte au moins un filet 420, 520, qui est agencé pour minimiser la surface de contact avec la demi-roue antagoniste.

Une des deux demi-roues 400 ou 500 est montée prisonnière entre l'autre demi-roue 500, 400, et un moyeu 8, ou similaire.

Un jeu axial JA entre la première demi-roue 400 et la deuxième demi-roue 500 est nécessaire à la liberté de celle des deux qui est ainsi montée prisonnière. Sur la réalisation particulière non limitative des figures 1 à 7, la première demi-roue 400 est chassée sur un moyeu 8, en appui sur une surface d'appui 82 que comporte un épaulement 81 de ce moyeu 8, et enferme la deuxième demi-roue 500, qui pivote librement par rapport à la première demi-roue 400, ici particulièrement et non limitativement par un alésage 53, sur une portée 43 de la première demi-roue 400.

De préférence, les premières demi-dents 4 de la première demi-roue 400 s'étendent de part et d'autre de la première surface d'appui 42 et de la deuxième surface d'appui 52, et les deuxièmes demi-dents 5 de la deuxième demi-roue 500 s'étendent aussi de part et d'autre de la première surface d'appui 42 et de la deuxième surface d'appui 52.

Dans une réalisation particulière, pour faciliter la liberté en rotation de la demi-roue prisonnière, la première surface d'appui 42 et/ou la deuxième surface d'appui 52 comporte un revêtement auto-lubrifiant de type «Teflon ®» ou polytétrafluoroéthylène, ou de type «Rilsan ®» ou polyundécanamide, aussi dit PA 11, ou similaire, qui est agencé pour minimiser le frottement avec la demi-roue antagoniste. La surface d'appui 82 du moyeu 8 peut être revêtue de la même façon.

Dans une réalisation particulière illustrée par les figures 1-6, 12 et 13, les moyens de rappel élastique 6 comportent au moins un ressort 64, 65, au niveau de au moins la première demi-roue 400 ou la deuxième demi-roue 500, cet au moins un ressort 64, 65, étant agencé pour coopérer avec une goupille 75, 74, que porte la demi-roue opposée à celle portant le ressort. De préférence, chaque ressort 64, 65, est logé dans un oblong 49, 59, qui limite à la fois le débattement du ressort, et celui de la goupille concernée, 75, 74. Les figures 12 et 13 illustrent un agencement où chaque demi-roue comporte une telle goupille et un tel ressort. Dans une variante, il est encore possible de réaliser un tel ressort 64, 65, comportant une fourche apte à prendre appui sur deux faces opposées de la goupille 75, 74. De façon particulière et avantageuse, et notamment dans les réalisations des figures, le ressort 64, 65 est monobloc avec la demi-roue 400, 500 qui le porte, ainsi que la goupille 74, 75. Naturellement il est aussi possible de réaliser le ressort ou/et la goupille en tant que composant rapporté.

Ce ressort 64, 65 comporte alors un pré-armage, agencé pour maintenir, dans une position au repos de la roue 1 sans engrènement avec un autre composant externe, chaque première demi-dent 4 et chaque deuxième demi-dent 5, constituant ensemble une dent 3, à distance l'une de l'autre.

De préférence et avantageusement, au moins la première demi-roue 400 ou la deuxième demi-roue 500 est réalisée en matériau micro-usinable ou en Nickel-Phosphore ou en silicium ou en oxyde de silicium ou en DLC, par un procédé « LIGA » ou « MEMS » ou similaire, la géométrie de chaque demi-roue est parfaitement compatible avec ces procédés.

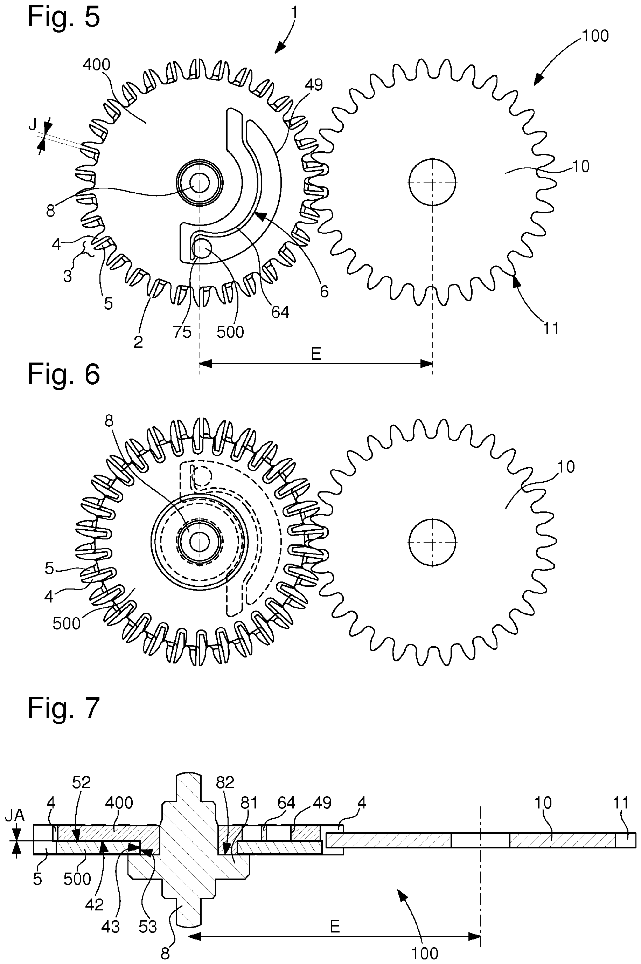

L'invention concerne encore un rouage d'horlogerie 100, comportant au moins une telle roue 1, et une roue complémentaire 10, dont la denture antagoniste 11 coopère à la fois avec les premières demi-dents 4 et avec les deuxièmes demi-dents 5. L'entraxe E entre la roue 1 et la roue complémentaire 10 est ajusté pour que le jeu entre chaque première demi-dent 4 et chaque deuxième demi-dent 5 d'une même dent 3, en position d'engrènement, soit inférieur au jeu au repos en l'absence de roue complémentaire entre la première demi-dent 4 et la deuxième demi-dent 5. La position de service de la roue 1 en engrènement avec la roue complémentaire 10 correspond à un jeu J non nul entre les deux demi-dents 4 et 5, qui est de valeur inférieure à celle du jeu maximal au repos, pour garantir que les demi-dents 4 et 5 viennent pincer la denture antagoniste 11 de la roue complémentaire 10. La valeur du jeu de service est avantageusement, et non limitativement, comprise entre 0.04 et 0.05mm. On ne peut venir au contact entre les demi-dents 4 et 5 d'une même dent 3 qu'en cas de choc sur la roue composée 1, ou sur la roue complémentaire 10. Le jeu J entre les demi-dents 4 et 5 peut, par contre, varier pour compenser des erreurs de fabrication ou un défaut d'entraxe. La coupe de la figure 7 montre un cas particulier d'engrènement avec la roue complémentaire 10 au niveau d'un plan médian, pour garantir une sécurité d'engrènement.. Mais on peut naturellement engrener sur uniquement le niveau d'une seule des demi-roues 400 ou 500, tel que visible sur les figures 10 et 11: on peut engrener à n'importe quel niveau, ce qui est un avantage majeur de l'invention.

L'invention concerne encore un mouvement d'horlogerie 200 comportant au moins un tel rouage d'horlogerie 100, ou comportant au moins une telle roue 1.

L'invention concerne encore une montre 1000 comportant un tel mouvement 200, ou comportant au moins un tel rouage d'horlogerie 100, ou comportant au moins une telle roue 1.

## Revendications

1. Roue d'horlogerie (1) composée à rattrapage de jeu, comportant une denture périphérique (2) dont chaque dent (3) comporte, de part et d'autre de sa partie médiane, une première demi-dent (4) comportant une première partie (40) du profil de denture, et une deuxième demi-dent (5) comportant une deuxième partie (50) du profil de denture, chaque dite première demi-dent (4) étant mobile par rapport à la dite deuxième demi-dent (5) de la même dite dent (3), à l'encontre de moyens de rappel élastique (6) tendant à écarter l'une de l'autre ladite première demi-dent (4) et la dite deuxième demi-dent (5) de la même dite dent (3), **caractérisée en ce que** ladite roue (1) comporte, empilées axialement, une première demi-roue (400) portant toutes lesdites premières demi-dents (4), et une deuxième demi-roue (500) portant toutes lesdites deuxièmes demi-dents (5), lesdites première demi-roue (400) et deuxième demi-roue (500) ayant une mobilité limitée en rotation l'une par rapport à l'autre, autour de l'axe de ladite denture (2), et à l'encontre desdits moyens de rappel élastique (6), **en ce que** la denture de chaque demi-roue déborde sur l'autre demi-roue, ladite première demi-roue (400) comportant des premiers évidements (41) dans chacun desquels une dite deuxième demi-dent (5) est mobile entre deux premières demi-dents (4) successives, et ladite deuxième demi-roue (500) comportant des deuxièmes évidements (51) dans chacun desquels une dite première demi-dent (4) est mobile entre deux deuxièmes demi-dents (5) successives.

2. Roue d'horlogerie (1) selon la revendication 1, **caractérisée en ce que** ladite première demi-roue (400) comporte une première surface d'appui (42) agencée pour coopérer en appui, ou bien avec une deuxième surface d'appui (52) antagoniste que comporte ladite deuxième demi-roue (500), ou bien avec une entretoise (45) montée prisonnière entre ladite première surface d'appui (42) et ladite deuxième surface d'appui (52).

3. Roue d'horlogerie (1) selon la revendication 2, **caractérisée en ce que** lesdites premières demi-dents (4) de ladite première demi-roue (400) s'étendent de part et d'autre de ladite première surface d'appui (42) et de ladite deuxième surface d'appui (52), et **en ce que** lesdites deuxièmes demi-dents (5) de ladite deuxième demi-roue (500) s'étendent aussi de part et d'autre de ladite première surface d'appui (42) et de ladite deuxième surface d'appui (52).

4. Roue d'horlogerie (1) selon la revendication 2 ou 3, **caractérisée en ce que** ladite première surface d'appui (42) et/ou ladite deuxième surface d'appui (52) comporte au moins un filet (420, 520) agencé pour minimiser la surface de contact avec la demi-roue antagoniste.

5. Roue d'horlogerie (1) selon l'une des revendications 2 à 4, **caractérisée en ce que** ladite première surface d'appui (42) et/ou ladite deuxième surface d'appui (52) comporte un revêtement auto-lubrifiant de polytétrafluoroéthylène ou de polyundécanamide, agencé pour minimiser le frottement avec la demi-roue antagoniste.

6. Roue d'horlogerie (1) selon l'une des revendications 1 à 5, **caractérisée en ce que** lesdits moyens de rappel élastique (6) comportent au moins un ressort (64, 65) au niveau de au moins ladite première demi-roue (400) ou ladite deuxième demi-roue (500), ledit au moins un ressort (64, 65) étant agencé pour coopérer avec une goupille (75, 74) que porte la demi-roue antagoniste à celle portant ledit ressort.

7. Roue d'horlogerie (1) selon la revendication 6, **caractérisée en ce que** ledit ressort (64, 65) est monobloc avec la demi-roue (400, 500) qui le porte.

8. Roue d'horlogerie (1) selon la revendication 6 ou 7, **caractérisée en ce que** ledit ressort (64, 65) comporte un pré-armage, agencé pour maintenir, dans une position au repos de ladite roue (1) sans engrènement avec un autre composant externe, chaque dite première demi-dent (4) et chaque dite deuxième demi-dent (5), constituant ensemble une dite dent (3), à distance l'une de l'autre.

9. Roue d'horlogerie (1) selon l'une des revendications 6 à 8, **caractérisée en ce que** ladite goupille (74, 75) est monobloc avec la demi-roue (400, 500) qui le porte.

10. Roue d'horlogerie (1) selon l'une des revendications 1 à 9, **caractérisée en ce que** au moins ladite première demi-roue (400) ou ladite deuxième demi-roue (500) est réalisée en matériau micro-usinable ou en Nickel-Phosphore Liga ou en silicium ou en oxyde de silicium ou en DLC.

11. Rouage d'horlogerie (100), comportant au moins une dite roue (1) selon l'une des revendications 1 à 10, et une roue complémentaire (10) dont la denture (11) coopère à la fois avec lesdites premières demi-dents (4) et avec lesdites deuxièmes demi-dents (5), l'entraxe (E) entre ladite roue (1) et ladite roue complémentaire (10) étant ajusté pour que le jeu entre chaque première demi-dent (4) et chaque deuxième demi-dent (5) d'une dite dent (3) en position d'engrènement soit inférieur au jeu au repos en l'absence de roue complémentaire entre ladite première demi-dent (4) et ladite deuxième demi-dent (5).

12. Mouvement d'horlogerie (200) comportant au moins un rouage d'horlogerie (100) selon la revendication 11, ou comportant au moins une roue (1) selon l'une des revendications 1 à 10.

13. Montre (1000) comportant un mouvement (200) selon la revendication 12, ou comportant au moins un rouage d'horlogerie (100) selon la revendication 11, ou comportant au moins une roue (1) selon l'une des revendications 1 à 10.

## Patentansprüche

1. Zusammengesetztes Uhrenrad (1) mit Spielverringerung, umfassend eine Umfangszahnung (2), von der jeder Zahn (3) beiderseits seines Mittelteils einen ersten Halbzahn (4), der einen ersten Teil (40) des Zahnprofil aufweist, und einen zweiten Halbzahn (5), der einen zweiten Teil (50) des Zahnprofil aufweist, umfasst, wobei jeder erste Halbzahn (4) in Bezug auf den zweiten Halbzahn (5) desselben Zahns (3) beweglich ist entgegen elastischer Rückstellmittel (6), die bestrebt sind, den ersten Halbzahn (4) und den zweiten Halbzahn (5) desselben Zahns (3) voneinander zu entfernen, **dadurch gekennzeichnet, dass** das Rad (1) axial gestapelt ein erstes Halbrad (400), das alle ersten Halbzähne (4) trägt, und ein zweites Halbrad (500), das alle zweiten Halbzähne (5) trägt, umfasst, wobei das erste Halbrad (400) und das zweite Halbrad (500) eine begrenzte rotatorische Beweglichkeit relativ zueinander um die Achse der Zahnung (2) und entgegen der elastischen Rückstellmittel (6) aufweisen, dass die Zahnung jedes Halbrades über das andere Halbrad vorsteht, wobei das erste Halbrad (400) erste Aussparungen (41) aufweist, in denen jeweils ein zweiter Halbzahn (5) zwischen zwei aufeinander folgenden ersten Halbzähnen (4) beweglich ist, und dass das zweite Halbrad (500) zweite Aussparungen (51) aufweist, in denen jeweils ein erster Halbzahn (4) zwischen zwei aufeinander folgenden zweiten Halbzähnen (5) beweglich ist.

2. Uhrenrad (1) nach Anspruch 1, **dadurch gekennzeichnet, dass** das erste Halbrad (400) eine erste Abstützfläche (42) aufweist zum abstützenden Zusammenwirken entweder mit einer zweiten Gegenabstützfläche (52), die das zweite Halbrad (500) aufweist, oder mit einem Abstandshalter (45), der eingeschlossen zwischen der ersten Abstützfläche (42) und der zweiten Abstützfläche (52) montiert ist.

3. Uhrenrad (1) nach Anspruch 2, **dadurch gekennzeichnet, dass** sich die ersten Halbzähne (4) des ersten Halbrades (400) beiderseits der ersten Abstützfläche (42) und der zweiten Abstützfläche (52) erstrecken und dass sich die zweiten Halbzähne (5) des zweiten Halbrades (500) ebenfalls beiderseits der ersten Abstützfläche (42) und der zweiten Abstützfläche (52) erstrecken.

4. Uhrenrad (1) nach Anspruch 2 oder 3, **dadurch gekennzeichnet, dass** die erste Abstützfläche (42) und/oder die zweite Abstützfläche (52) mindestens eine Leiste (420, 520) aufweist, das so angeordnet ist, dass es die Kontaktoberfläche mit dem Gegenhalbrad minimiert.

5. Uhrenrad (1) nach einem der Ansprüche 2 bis 4, **dadurch gekennzeichnet, dass** die erste Abstützfläche (42) und/oder die zweite Abstützfläche (52) eine selbstschmierende Beschichtung aus Polytetrafluoerethylen oder Polyundecanamid umfasst, die angeordnet ist, die Reibung mit dem Gegenhalbrad zu minimieren.

6. Uhrenrad (1) nach einem der Ansprüche 1 bis 5, **dadurch gekennzeichnet, dass** die elastischen Rückstellmittel (6) mindestens eine Feder (64, 65) auf Höhe mindestens des ersten Halbrades (400) oder des zweiten Halbrades (500) umfassen, wobei die mindestens eine Feder (64, 65) angeordnet ist, mit einem Sperrstift (75, 74) zusammenzuwirken, den das Halbrad trägt, das das Gegenstück zu jenem bildet, das die Feder trägt.

7. Uhrenrad (1) nach Anspruch 6, **dadurch gekennzeichnet, dass** die Feder (64, 65) mit dem sie tragenden Halbrad (400, 500) einteilig ausgebildet ist.

8. Uhrenrad (1) nach Anspruch 6 oder 7, **dadurch gekennzeichnet, dass** die Feder (64, 65) eine Vorspannung aufweist, die dafür ausgelegt ist, in einer Ruheposition des Rades (1) ohne Eingriff mit einer anderen äußeren Komponente jeden ersten Halbzahn (4) und jeden zweiten Halbzahn (5), die zusammen einen Zahn (3) bilden, in gegenseitigem Abstand zu halten.

9. Uhrenrad (1) nach einem der Ansprüche 6 bis 8, **dadurch gekennzeichnet, dass** der Sperrstift (74, 75) mit dem ihn tragenden Halbrad (400, 500) einteilig ausgebildet ist.

10. Uhrenrad (1) nach einem der Ansprüche 1 bis 9, **dadurch gekennzeichnet, dass** mindestens das erste Halbrad (400) oder das zweite Halbrad (500) aus einem mikrobearbeitbarem Material oder aus Nickel-Phosphor-"LIGA" oder aus Silicium oder aus Siliciumoxid oder aus DLC hergestellt ist.

11. Uhrenräderwerk (100), umfassend mindestens ein Rad (1) nach einem der Ansprüche 1 bis 10 und ein komplementäres Rad (10), dessen Zahnung (11) gleichzeitig mit den ersten Halbzähnen (4) und mit den zweiten Halbzähnen (5) zusammenwirkt, wobei der Mittenabstand (E) zwischen dem Rad (1) und dem komplementären Rad (10) so eingestellt ist, dass das Spiel zwischen jedem ersten Halbzahn (4) und jedem zweiten Halbzahn (5) eines Zahns (3) in der Eingriffposition kleiner ist als das Spiel im Ruhezustand bei Abwesenheit des komplementären Rades zwischen dem ersten Halbzahn (4) und dem zweiten Halbzahn (5).

12. Uhrwerk (200), umfassend mindestens ein Uhrenräderwerk (100) nach Anspruch 11 oder umfassend mindestens ein Rad (1) nach einem der Ansprüche 1 bis 10.

13. Uhr (1000), umfassend ein Uhrwerk (200) nach Anspruch 12 oder umfassend mindestens ein Uhrenräderwerk (100) nach Anspruch 11 oder umfassend mindestens ein Rad (1) nach einem der Ansprüche 1 bis 10.

## Claims

1. Composite timepiece wheel (1) with play take-up, including a peripheral toothing (2), each tooth (3) of which includes, on either side of the median part thereof, a first half-tooth (4) including a first part (40) of the tooth profile, and a second half-tooth (5) including a second part (50) of the tooth profile, each said first half-tooth (4) being movable with respect to said second half-tooth (5) of the same said tooth (3), against elastic return means (6) tending to move said first half-tooth (4) and said second half-tooth (5) of the same said tooth (3) away from each other, **characterized in that** said wheel (1) includes, axially stacked, a first half-wheel (400) carrying all said first half-teeth (4), and a second half-wheel (500) carrying all said second half-teeth (5), said first half-wheel (400) and said second half-wheel (500) having limited rotational mobility with respect to each other, about the axis of said toothing (2), and against said elastic return means (6), **in that** the toothing of each half-wheel protrudes from the other half-wheel, said first half-wheel (400) including first hollows (41), inside each of which a second half-wheel (5) is movable between two first successive half-teeth (4), and said second half-wheel (500) including second hollows (51), inside each of which a first half-tooth (4) is movable between two successive second half-teeth (5).

2. Timepiece wheel (1) according to claim 1, **characterized in that** said first half-wheel (400) includes a first bearing surface (42) arranged to cooperate in abutment, either with a second opposing bearing surface (52) comprised in said second half-wheel (500), or with a spacer (45) captively mounted between said first bearing surface (42) and said second bearing surface (52).

3. Timepiece wheel (1) according to claim 2, **characterized in that** said first half-teeth (4) of said first half-wheel (400) extend on either side of said first bearing surface (42) and of said second bearing surface (52), and **in that** said second half-teeth (5) of said second half-wheel (500) also extend on either side of said first bearing surface (42) and of said second bearing surface (52).

4. Timepiece wheel (1) according to claim 2 or 3, **characterized in that** said first bearing surface (42) and/or said second bearing surface (52) includes at least one fillet (420, 520), arranged to minimise the contact surface with the opposing half-wheel.

5. Timepiece wheel (1) according to any of claims 2 to 4, **characterized in that** said first bearing surface (42) and/or said second bearing surface (52) includes a self-lubricating coating of polytetrafluoroethylene or polyundecanamide, arranged to minimise friction with the opposing half-wheel.

6. Timepiece wheel (1) according to any of claims 1 to 5, **characterized in that** said elastic return means (6) include at least one spring (64, 65), on at least said first half-wheel (400) or said second half-wheel (500), said at least one spring (64, 65) being arranged to cooperate with a pin (75, 74), carried by the half-wheel opposing that carrying said spring.

7. Timepiece wheel (1) according to claim 6, **characterized in that** said spring (64, 65) is in one piece with the half-wheel (400, 500) that carries said spring.

8. Timepiece wheel (1) according to claim 6 or 7, **characterized in that** said spring (64, 65) is pre-wound, arranged, in a rest position of said wheel (1) without mesh with another external component, to hold each said first half-tooth (4) and each said second half-tooth (5), together forming one said tooth (3), at a distance from each other.

9. Timepiece wheel (1) according to any of claims 6 to 8, **characterized in that** said pin (74, 75) is in one piece with the half-wheel (400, 500) that carries said pin.

10. Timepiece wheel (1) according to any of claims 1 to 9, **characterized in that** at least said first half-wheel (400) or said second half-wheel (500) is made of micromachinable material or of nickel-phosphorus LIGA or of silicon or of silicon oxide or of DLC.

11. Timepiece gear train (100) including at least one said wheel (1) according to any of claims 1 to 10, and a complementary wheel (10) whose toothing (11) cooperates both with said first half-teeth (4) and with said second half-teeth (5), the air gap (E) between said wheel (1) and said complementary wheel (10) being adjusted so that the play between each first half-tooth (4) and each second half-tooth (5) of a said tooth (3) in the meshing position is less than the play in rest position in the absence of any complementary wheel between said first half-tooth (4) and said second half-tooth (5).

12. Timepiece movement (200) including at least one timepiece train (100) according to claim 11 or including at least one wheel (1) according to any of claims 1 to 10.

13. Watch (1000) including a movement (200) according to claim 12, or including at least one timepiece train (100) according to claim 11 or including at least one wheel (1) according to any of claims 1 to 10.
